# EUROPEAN PATENT APPLICATION

(11) **EP 4 663 456 A1**
(43) Date of publication of application: **17.12.2025**
(21) Application number: 24181451.6
(22) Date of filing: 11.06.2024
(51) Int. Cl.: B60L 3/00

(54) **COMPUTER SYSTEM AND METHOD FOR RESPONDING TO FAULTS IN AN ELECTRICAL ENERGY STORAGE SYSTEM OF A VEHICLE BASED ON WEIGHTED FAULTS**

(71) Applicant: VOLVO TRUCK CORPORATION, 405 08 Göteborg (SE)
(72) Inventor: RAY, Dripta, 412 76 GÖTEBORG (SE); LILLMAA, Henri, 463 72 LÖDÖSE (SE)
(74) Representative: Kransell & Wennborg KB

(57) **Abstract**

A computer system (100) for responding to faults in an electrical energy storage system (104) of a vehicle (106) comprising multiple electrical energy storage packs (108), the computer system comprising processing circuitry (102) configured to: detect at least one of a thermal fault and an electrical fault in at least one of the electrical energy storage packs (108); provide a weight (132) to the fault based on the severity of the fault; collect vehicle data including at least a vehicle location parameter (124); provide weights to the vehicle data parameters based on their impact on vehicle/passenger safety, determine a safe fault reaction based on an algorithm (120) using the weighted fault(s) and the weighted vehicle data parameters, as inputs to the algorithm; and provide an instruction (C) to execute the safe fault reaction.

## Description

### TECHNICAL FIELD

The disclosure relates generally to electrical energy storage systems. In particular aspects, the disclosure relates to computer system and method for responding to faults in an electrical energy storage system of a vehicle based on weighted faults. The disclosure can be applied to heavy-duty vehicles, such as trucks, buses, and construction equipment, among other vehicle types. The disclosure can also be applied to passenger cars. Although the disclosure may be described with respect to a particular vehicle, the disclosure is not restricted to any particular vehicle.

### BACKGROUND

In current systems, high voltage battery packs are managed independently, often reacting to faults on the battery pack level without relying on input/intervention from other vehicle sub-systems providing a broader vehicle context. This isolated approach can lead to suboptimal safety outcomes, particularly in complex scenarios where vehicle surroundings and operating conditions significantly influence the safest response.

### SUMMARY

According to a first aspect of the disclosure, there is provided a computer system for responding to faults in an electrical energy storage system of a vehicle comprising multiple electrical energy storage packs, the computer system comprising processing circuitry configured to: detect at least one of a thermal fault and an electrical fault in at least one of the electrical energy storage packs; provide a weight to the fault based on the severity of the fault; collect vehicle data including at least a vehicle location parameter; provide weights to the vehicle data parameters based on their impact on vehicle/passenger safety, determine a safe fault reaction based on an algorithm using the weighted fault(s) and the weighted vehicle data parameters, as inputs to the algorithm; and provide an instruction to execute the safe fault reaction.

The first aspect of the disclosure may seek to provide improved handling of faults in electrical energy storage systems. In particular, the disclosure provides for deciding on the reaction to a fault based on not only the fault itself, but also the location and surroundings of the vehicle. That is, the response is based on the global safety of the vehicle and not only on the local fault in the electrical energy storage system.

By integrating fault detection with vehicle data, including location parameters, the system can tailor its responses to the context in which the vehicle operates. This leads to safer outcomes as the reaction to a fault is not just based on the fault itself but also considers where the vehicle is and what conditions it faces, such as being in a tunnel or on a steep incline.

Optionally in some examples, including in at least one preferred example, the vehicle data further includes a vehicle surroundings parameter that depends on objects detected near the vehicle. A technical benefit may include that the location of objects near the vehicles are also considered thereby providing for better decision making and improved safety. For example, the proximity of other vehicles, pedestrians, or environmental hazards can significantly affect the decision-making process in terms of safety measures.

Optionally in some examples, including in at least one preferred example, the processing circuitry is further configured to determine the safe fault reaction further based on the number of electrical energy storage packs installed in the vehicle, the number of electrical energy storage packs connected to the voltage bus in the vehicle, and the number of electrical energy storage packs involved in the fault. A technical benefit may include that the safe fault reaction may consider the available power and/or energy of the electrical energy storage system taking the faulty pack(s) into account and understanding resource allocation possibilities. Furthermore, the overall impact of the fault may be better assessed, for example reducing the risk of cascading faults.

Optionally in some examples, including in at least one preferred example, the vehicle data further includes at least one of the number of passengers and cargo type. A technical benefit may include that safety measures are proportionate and appropriate to the potential impact on human safety and cargo safety. The inclusion of cargo type, particularly if the cargo is hazardous, significantly enhances the system's ability to manage risks effectively and provide appropriate safety fault responses.

Optionally in some examples, including in at least one preferred example, the weighting of parameters and faults is determined from a predetermined look-up table, or by the algorithm. Whether using static tables or dynamic algorithms, this approach facilitates efficient computation of the appropriate responses to faults.

Optionally in some examples, including in at least one preferred example, the safe fault reaction is one of disconnecting or maintaining an electrical energy storage pack connected to a voltage bus connected to a load. A technical benefit may include that maintaining the electrical energy storage pack connected to the voltage bus allows for completing a present driving action if it is considered the safest global response. In other situations, the globally safest response is to disconnect the electrical energy storage pack, for example at high risk of thermal runaway at an inappropriate location and/or surrounding.

Optionally in some examples, including in at least one preferred example, the algorithm calculates a first score based on the weights determined for a first option being to maintain contactors of the electrical energy storage system to a voltage bus closed, and a second score based on the weights determined for a second option being to open the contactors of the electrical energy storage, and to compare the first score to the second score to determine which of maintaining the contactors closed or opening the contactors is the safe fault reaction. A technical benefit may include that a simple, yet robust method is provided for deciding on the safe fault reaction.

Optionally in some examples, including in at least one preferred example the processing circuitry may be further configured to: determine, from the vehicle data that the vehicle is in a tunnel or on a steep descent or steep ascent, and determine, based on the algorithm and the weights to the fault severity that the safe fault reaction is to maintain the electrical energy storage system connected for a time duration. A technical benefit may include the ability to identify and respond to location-specific conditions which allows the system to enhance safety during potentially dangerous scenarios. For example, in tunnels, where evacuation options are limited, or on steep inclines, where stopping could be hazardous, maintaining the energy supply can be crucial.

Optionally in some examples, including in at least one preferred example, the safe fault reaction may include to disconnect the electrical energy storage system once the time duration has lapsed. A technical benefit may include that improved safety is provided by that the electrical energy storage system is only allowed to be disconnected once it is safe, from a vehicle global perspective to do so.

Optionally in some examples, including in at least one preferred example, the time duration may be sufficient to drive through the tunnel or past the steep descent or steep ascent when the severity of the thermal fault or the electrical fault indicates that a thermal event will not occur within the time duration. Again, a technical benefit may include that improved safety is provided by that the electrical energy storage system is only allowed to be disconnected once it is safe, from a vehicle global perspective to do so. That is, it may be consider safer to complete the driving through the tunnel of past the steep descent or steep ascent if the severity of the fault is not too high, than stopping the vehicle in the tunnel or in the steep descent or steep ascent.

Optionally in some examples, including in at least one preferred example, the processing circuity may be configured to determine the safe fault reaction and/or weights further based on a state of energy in the electrical energy storage packs. This advantageously allows for evaluating the severity of the fault with more accuracy. For example, an electrical energy storage pack with high state of charge and therefore higher energy content risk a faster thermal event propagation compared to an electrical energy storage pack with lower state of charge.

There is further provided a vehicle comprising the computer system.

According to a second aspect of the disclosure, there is provided a computer-implemented method, comprising: detecting, by processing circuitry of a computer system, at least one of a thermal fault and an electrical fault in at least one of the electrical energy storage packs; providing, by the processing circuitry, a weight to the fault based on the severity of the fault; collecting, by the processing circuitry, vehicle data including at least a vehicle location parameter; providing, by the processing circuitry, weights to the vehicle data parameters based on their impact on vehicle/passenger safety, determining, by the processing circuitry, a safe fault reaction signal based on an algorithm using the weighted fault(s) and the weighted vehicle data parameters, as inputs to the algorithm; and providing, by the processing circuitry, an instruction to execute the safe fault reaction.

The second aspect of the disclosure may seek to provide improved handling of faults in electrical energy storage systems. In particular, the disclosure provides for deciding on the reaction to a fault based on not only the fault itself, but also the location and surroundings of the vehicle. That is, the response is based on the global safety of the vehicle and not only on the local fault in the electrical energy storage system.

Optionally in some examples, including in at least one preferred example, the method may comprise determining the safe fault reaction and/or weights further based on a state of energy in the electrical energy storage packs. This advantageously allows for evaluating the severity of the fault with more accuracy. For example, an electrical energy storage pack with high state of charge and therefore higher energy content risk a faster thermal event propagation compared to an electrical energy storage pack with lower state of charge.

Optionally in some examples, including in at least one preferred example, the vehicle data further includes a vehicle surroundings parameter that depends on objects detected near the vehicle and/or a number of passengers parameter and/or a cargo type parameter. The inclusion of cargo type, particularly if the cargo is hazardous, significantly enhances the system's ability to manage risks effectively and provide appropriate safety fault responses. A further technical benefit may include that the location of objects near the vehicles are also considered thereby providing for better decision making and improved safety. For example, the proximity of other vehicles, pedestrians, or environmental hazards can significantly affect the decision-making process in terms of safety measures. In addition, a further technical benefit may include that the safety measures are proportionate and appropriate to the potential impact on human safety.

Optionally in some examples, including in at least one preferred example, the method may include determining, by the processing circuitry, the safe fault reaction further based on the number of electrical energy storage packs installed in the vehicle, the number of electrical energy storage packs connected to the bus in the vehicle, and the number of electrical energy storage packs involved in the fault. A technical benefit may include that the safe fault reaction may consider the available power of the electrical energy storage system taking the faulted pack(s) into account and understanding resource allocation possibilities. Furthermore, the overall impact of the fault may be better assessed, for example reducing the risk of cascading faults.

Optionally in some examples, including in at least one preferred example, the algorithm may calculate a first score based on the weights determined for a first option being to maintain contactors of the electrical energy storage system to a voltage bus closed, and a second score based on the weights determined for a second option being to open the contactors of the electrical energy storage, and to compare the first score to the second score to determine which of maintaining the contactors closed or opening the contactors is the safe fault reaction. A technical benefit may include that a simple, yet robust method is provided for deciding on the safe fault reaction.

Optionally in some examples, including in at least one preferred example, the processing circuitry may be further configured to determine, from the vehicle data that the vehicle is in a tunnel or on a steep descent or steep ascent, and determine, based on the algorithm and the weights to the fault severity that the safe fault reaction is to maintain the electrical energy storage system connected for a time duration. A technical benefit may include the ability to identify and respond to location-specific conditions which allows the system to enhance safety during potentially dangerous scenarios. For example, in tunnels, where evacuation options are limited, or on steep inclines, where stopping could be hazardous, maintaining the energy supply can be crucial.

Optionally in some examples, including in at least one preferred example, the safe fault reaction may include disconnecting the electrical energy storage system once the time duration has lapsed. A technical benefit may include that improved safety is provided by that the electrical energy storage system is only allowed to be disconnected once it is safe, from a vehicle global perspective to do so.

Optionally in some examples, including in at least one preferred example, the time duration may be sufficient to drive through the tunnel or past the steep descent or steep ascent when the severity of the thermal fault or the electrical fault indicates that a thermal event will not occur within the time duration. Again, a technical benefit may include that improved safety is provided by that the electrical energy storage system is only allowed to be disconnected once it is safe, from a vehicle global perspective to do so. That is, it may be consider safer to complete the driving through the tunnel of past the steep descent or steep ascent if the severity of the fault is not too high, than stopping the vehicle in the tunnel or in the steep descent or steep ascent.

There is further provided a computer program product comprising program code for performing, when executed by the processing circuitry, the method of any of the herein disclosed examples.

There is further provided a non-transitory computer-readable storage medium comprising instructions, which when executed by the processing circuitry, cause the processing circuitry to perform the method of any of the herein disclosed examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system for responding to faults in an electrical energy storage system of a vehicle according to an example.
**FIG. 2** schematically illustrates a vehicle driving on a road through a tunnel according to an example.
**FIG. 3** illustrates the vehicle travelling on an uphill slope according to an example.
**FIG. 4** is a flow-chart of method steps according to an example.
**FIG. 5** is a flow-chart of method steps according to an example.
**FIG. 6** is another view of **FIG. 1****,** according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Fault handling in electrical energy storage packs is traditionally handled on a local scale. This means that the response to a detected fault is handled by the electrical energy storage pack itself as an isolated unit, typically by an electrical energy storage pack controller. This may lead to disconnection of a faulty electrical energy storage pack from a load in situations where it may cause a hazardous situation for the vehicle. That is, the electrical energy storage pack reacts to the fault without relying on input/intervention from other vehicle sub-systems. For example, a vehicle subsystem(s) may request opening contactors of the faulty electrical energy storage pack which may be part of a vehicle powertrain energy storage system. This may not always be the safest response for the vehicle on a more global level.

Instead, the present disclosure provides for that the controller of an electrical energy storage pack does not locally decide what is the safest reaction based on its fault but relies on an energy storage system controller to collect, interpret, and process for example the vehicle location and surroundings data together with the fault type/fault information from the electrical energy storage pack and optionally information from the entire electrical energy storage system such as number of packs and their state of charge and power ability. The electrical energy system controller provides the fault reaction that targets what is safest 'globally' for the vehicle.

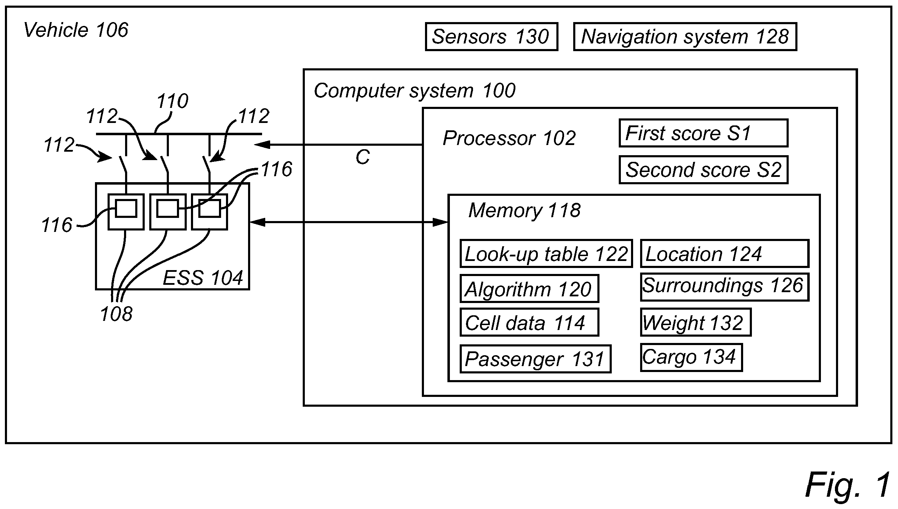

**FIG. 1** is an exemplary system diagram of a computer system 100 for responding to faults in an electrical energy storage system 104 of a vehicle 106 according to an example. The electrical energy storage system 104 comprises multiple electrical energy storage packs 108.

The electrical energy storage packs 108 each comprises electrical energy storage cells which includes suitable chemistry for generating electrical power. For example, the electrical energy storage packs 108 may comprise Li-ion cells electrically connected in series and/or parallel for providing output power.

The electrical energy storage packs 108 are connected to a voltage bus 110 via respective contactors 112. The voltage bus may in the present context be a high voltage bus 110, controllable by the processing circuitry 102. The contactors 112 can be in an open state and a closed state, where, in the open state electrical current cannot pass from the electrical energy storage pack 108 and the voltage bus 110 which are disconnected, and in the closed state the electrical energy storage pack 108 is electrically connected to the high voltage bus 110.

The high voltage bus 110 may be connected to an electrical machine such as an electrical motor providing propulsion power to a hybrid- or fully electric vehicle 106.

The computer system 100 comprises processing circuitry 102 configured to detect at least one of a thermal fault and an electrical fault in at least one of the electrical energy storage packs 108. The processing circuitry 102 may receive measurement data 114 from sensors 116 of the electrical energy storage packs 108 such as cell voltages, cell temperatures, discharge currents, etc., from which a thermal fault and/or an electrical fault in an electrical energy storage pack 108 can be determined.

The measurement data 114, or cell data 114, may be stored in a memory 118 of the computer system 100.

The memory 118 may further store algorithms 120 and/or look-up tables 122 used for the herein described examples.

The processing circuitry 102 has access to vehicle data including at least a vehicle location parameter 124, and optionally a vehicle surroundings parameter 126, stored in the memory 104. The location parameter 124 may be received from a navigation system 128 of the vehicle, such as a GPS, and indicates the location of the vehicle 106. The location may indicate tunnels, highways, gas stops, etc. The vehicle surroundings parameter 126 may be received from perception sensors 130 of the vehicle monitoring the surroundings of the vehicle to detect objects near the vehicle 106. Such sensors 130 may be for example cameras, radar, Lidar, ultrasound sensors, etc.

The vehicle data may further include at least one of number of passengers 131 in the vehicle 106 and the cargo type 134. The cargo type may be for example is it is dangerous goods, or time critical goods in terms aging.

The processing circuitry 102 is configured to provide a weight 132 to the fault based on the severity of the fault.

The processing circuitry 102 is further configured to collect vehicle data including at least a vehicle location parameter 124 and optionally vehicle surroundings parameter 126 that depends on objects detected near the vehicle and provide weights 132 to the vehicle data parameters based on their impact on vehicle/passenger safety.

The weighting of parameters and/or faults is determined from a predetermined look-up table, or by an algorithm 120.

The processing circuitry 102 is configured to determine a safe fault reaction based on the algorithm 120 using the weighted fault(s) and the weighted vehicle data parameters, as inputs to the algorithm 120. The safe fault reaction may be one of disconnecting or maintaining an electrical energy storage pack associated with a fault connected to the voltage bus 110 connected to a load.

Furthermore, the safe fault reaction may be based on the number of electrical energy storage packs 108 installed in the vehicle 106, the number of electrical energy storage packs connected to the bus 110 in the vehicle 106, and the number of electrical energy storage packs 108 involved in the fault. This allows for evaluating the available resources in the electrical energy storage system while accounting for the one or more faulty electrical energy storage packs 108 and the present location and surroundings of the vehicle 106. For example, if it is crucial to maintain operation of the vehicle 106, the power required may be evaluated. It may be determined that operation can be maintained even of the faulty electrical energy storage pack 108 is disconnected, which then may be the safe fault reaction. Typically, if the vehicle has many electrical energy storage packs and only one is subject of a fault, the faulty electrical energy storage pack is disconnected.

In addition, weighting and/or the safe fault reaction may take into account energy storage system state information such as state of charge, and power-abilities of the electrical energy storage packs 108. Stated differently, the state of the electrical energy storage system may be considered in the decision making/weighing. For example, identical electrical energy storage packs 108 with one having "low" state of charge and other having "high" state of charge, then in case of thermal event, the electrical energy storage pack 108 with higher State of charge has more intense thermal event in terms of released energy and how fast it thereby propagates throughout the electrical energy storage pack 108. Thus, a fault in the electrical energy storage pack with higher state of charge may be weighted as more severe than a fault in an energy storage pack with lower state of charge.

The processing circuitry 102 may thus provide a weight that indicates a higher severity fault if the state of charge is high compared to the weight if the state of charge is low. Thus, the processing circuitry determines the state of charge of the electrical energy storage pack(s) involve in a fault and determines the weight of the fault at least partly based on the state of charge of the electrical energy storage pack.

The processing circuitry 102 provides an instruction C to execute the safe fault reaction.

The algorithm 120 used for determining the safe fault reaction, e.g., to open or close contactors 112, may be based on a scoring scheme. The algorithm 120 may be to compare sums of weights for the two options to open or to close contactors 112 of the faulty electrical energy storage pack 108.

Firstly, the algorithm 120 calculates a first score S1 based on the weights determined for a first option being to maintain contactors 112 of the one or more faulty electrical energy storage packs to the voltage bus 110 closed. The weights are numerical values that depend on the severity of maintaining the respective contactor 112 closed. A minor fault in the electrical energy storage pack 108 may be provided a lower weight whereas a more severe fault may be provided a higher weight. If the electrical energy storage pack with the fault has high state of charge a higher weight may be assigned compared to if the state of charge is lower. The location parameter and surroundings parameters will also be provided weights for the option of maintaining the contactor(s) 112 closed. If there is an associated risk with maintaining the contactor closed, a higher weight is provided compared to if it is desirable to be able to continue using the faulty electrical energy storage pack 108.

In a similar way is a second score calculated by the algorithm 120 based on the weights determined for a second option being to open the contactors 120 of the faulty electrical energy storage pack(s) 108. Finally, the algorithm 120 compares the first score to the second score to determine which of maintaining the contactors closed or opening the contactors is the safe fault reaction.

The algorithm 120 may be realized in different ways. The algorithm may be configured to find the optimal solution based on e.g., a time restraint and/or severity restraint. In case of fault, the weights could be given for two options for a first option to maintain contactors closed or a second option to close the contactors due to fault. This evaluation could be cyclically/periodically re-evaluated for example every couple of seconds.

The two options could be given weights based on for example location data, surroundings data but could also include time, e.g. time until predicted critical event, such as thermal event, severity criteria such as a fault severity that may be based on predicted worst case resulting event due to fault, and probability of the severe event happening. There could for example be a sum of weights algorithm to determine the optimal solution, to either open contactors or maintain the contactors closed.

For example, consider a situation of an active fault, such as in a Hazardous/High-voltage Voltage Interlock Loop (HVIL), an isolation fault, a voltage and/or temperature and/or current sensor while the vehicle is in a tunnel. A tunnel is considered a risky location for stopping the vehicle.

For the option of maintaining contactors 112 closed and continue driving in the tunnel the penalty is low (e. g weight 1), that is, it is preferred to keep driving until completing the tunnel. The severity of the fault in itself depends on the type of fault, number of packs and their state of charge and may as an example be medium (e.g., weight 2).

HVIL is a mechanism built into the high voltage contactors that is intended to assure that service personnel are not exposed to high voltage during service of the vehicle.

For the option to open the contactors 112 the probability of a severe event, that is the severity of the fault, could be medium (weight of 2), location penalty is high (e.g. weight 3) for making a stop due to dangerous locations and/or surroundings in the tunnel. Then it could be determined that the option for keeping the contactors closed in a tunnel has smaller resulting impact compared to opening contactors 112.

The location and/or surroundings could be for example categorized as safe, e.g. stop at a safe location like gas station, truck stop, risky such as stopping on a road, and dangerous such as stopping on a highway or in a tunnel.

In case of thermal event or faults that could lead to thermal event, e.g., over/under voltage or over charge/discharge, over temperature, a time aspect could be evaluated, to evaluate if it is disadvantageous to keep the contactors closed until reaching safe place compared to for example opening contactors at a risky location.

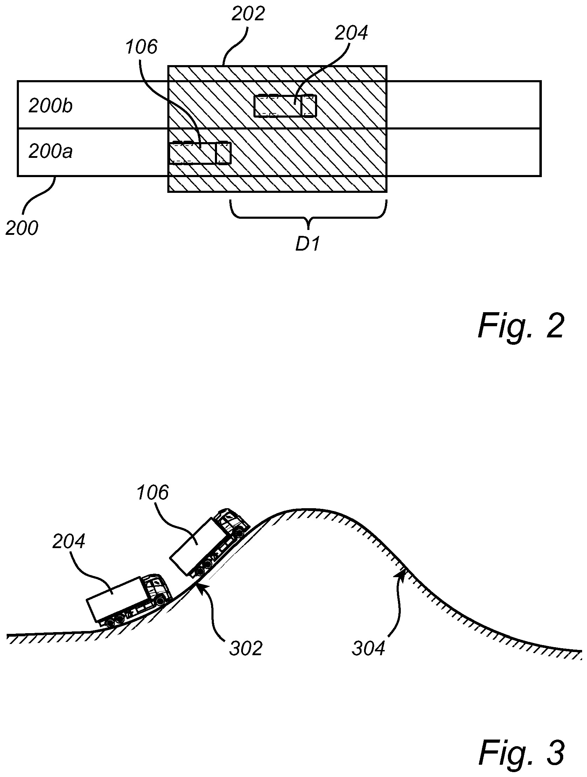

**FIG. 2** schematically illustrates a vehicle 106 driving on a road 200 in lane 200a through a tunnel 202. At its present location, the vehicle has to cover a distance D1 to exit the tunnel 202. In the opposite lane 200b a secondary vehicle 204 is approaching and may be detected by sensors 130 of the vehicle 106.

The processing circuitry 102 determines, from the location parameter 124 that the vehicle 106 is in a tunnel 202. The processing circuitry 102 further detects at least one of a thermal fault and an electrical fault in at least one of the electrical energy storage packs 108 of the vehicle 106.

The processing circuitry 102 may either open the contactor 112 of the faulty electrical energy storage pack 108 or it may maintain the contactor 112 closed. The processing circuitry 102 evaluates the two options in algorithm 120 and provides weights.

The first option is to maintain contactors 112 of the one or more faulty electrical energy storage packs to the voltage bus 110 closed. The severity of the fault may in this case be medium which results in a weight 2, assuming a scale of low=1, medium=2, high=3. The location is in a tunnel 202 in which there is a risk associated with not being able to cover the entire distance D1 of the tunnel 202. Thus, the low weight 1 is provided to the location for the option of maintaining the contactor closed. Assuming also that the vehicle 106 has further fully operational electrical energy storage packs, a low weight 1 is provided also for this parameter related to number of electrical energy storage packs. The surroundings parameter 126 indicate a vehicle 204 in the opposite lane 200b, which does not pose any immediate risk, and a low weight 1 is provided. Similar assessments may be performed for other parameters. The first score being the sum of the weights for the first option is 2+1+1+1=5.

The second option is to open contactors 112 of the one or more faulty electrical energy storage packs to the voltage bus 110. As above, the severity of the fault is medium which results in a weight 2. The location is in a tunnel 202 in which there is a risk associated with not being able to cover the entire distance D 1 of the tunnel 202. Thus, the high weight 3 is provided to the location for the option of opening the contactor 112 and risk having to stop the vehicle 106. Assuming also that the vehicle 106 has further fully operational electrical energy storage packs, a low weight 1 is provided also for this parameter. The surroundings parameter 126 indicate a vehicle 204 in the opposite lane 200b, which does not pose any immediate risk, and a low weight 1 is provided. The second score being the sum of weights for the second option is 2+3+1+1=7.

The total score for the first option, 5, is smaller than the total score for the second option, 7. The safe fault reaction is in this case the first option, being to maintain the electrical energy storage packs 108 connected at least for a time duration. The time duration may be sufficient to travel the distance D1 so that the vehicle 106 can exit the tunnel 202. The safe fault reaction may further include an action to disconnect the faulty electrical energy storage pack 108 once the time duration has lapsed, that is, when the vehicle is safely outside the tunnel 202.

**FIG. 3** illustrates the vehicle 106 travelling on an uphill slope 302. The processing circuitry 102 determines, from the location parameter 124 that the vehicle 106 is in the uphill slop 302. The processing circuitry 102 further detects at least one of a thermal fault and an electrical fault in at least one of the electrical energy storage packs 108 of the vehicle 106.

The processing circuitry 102 may either open the contactor 112 of the faulty electrical energy storage pack 108 or it may maintain the contactor 112 closed. The processing circuitry 102 evaluates the two options and provides scores.

The first option is to maintain contactors 112 of the one or more faulty electrical energy storage packs to the voltage bus 110 closed. The severity of the fault may in this case be low which results in a weight 1, assuming a scale of low=1, medium=2, high=3. The location is in a steep ascent 302 in which there is a risk associated with not being able to climb the entire ascent 302. Thus, the low weight 1 is provided to the location for the option of maintaining the contactor closed. Assuming also that the vehicle 106 has further fully operational electrical energy storage packs, a low weight 1 is provided also for this parameter. Thus, there may be other packs to assist. The surroundings parameter 126 indicate a vehicle 204 behind the vehicle 104, whereby a low weight 1 is provided since there is a risk associated with stopping with vehicles behind, thus, the low weight supports to maintain the contactor closed. Similar assessments may be performed for other parameters. The first score being the sum of the weights for the first option is 1+1+1+2=5.

The second option is to open contactors 112 of the one or more faulty electrical energy storage packs to the voltage bus 110. As above, the severity of the fault is low which results in a weight 1. The location is in a steep ascent 302 in which there is a risk associated with not being able to climb the ascent 302. Thus, the high weight 3 is provided to the location for the option of opening the contactor 112. Assuming also that the vehicle 106 has further fully operational electrical energy storage packs, a low weight 1 is provided also for this parameter. The surroundings parameter 126 indicate a vehicle 204 behind the host vehicle 104, for which a high weight 3 is provided since there is risk associated with opening the contactor 112 and not be able to climb the ascent. The second score being the sum of weights for the second option is 1+3+1+3=8.

The total score for the first option, 5, is smaller than the total score for the second option, 8. The safe fault reaction is in this case the first option, being to maintain the electrical energy storage packs 108 connected at least for a time duration. The time duration may be sufficient to travel a distance D1 so that the vehicle 106 can climb the ascent 302. The safe fault reaction may further include an action to disconnect the faulty electrical energy storage pack 108 once the time duration has lapsed, that is, when the vehicle is safely beyond the ascent 302.

A similar assessment may be performed for the descent. However, in such case the location parameter may be provided a low weight for the second option of disconnecting the electrical energy storage pack 108. Furthermore, a low weight may be provided for the surroundings parameter indicating a vehicle 204 behind for the second option due to the descent. Overall, the safe fault reaction may be the first option, to disconnect the faulty electrical energy storage pack.

The time duration is sufficient to drive through the tunnel or past the steep descent or steep ascent when the severity of the thermal fault or the electrical fault indicates that a thermal event will not occur within the time duration.

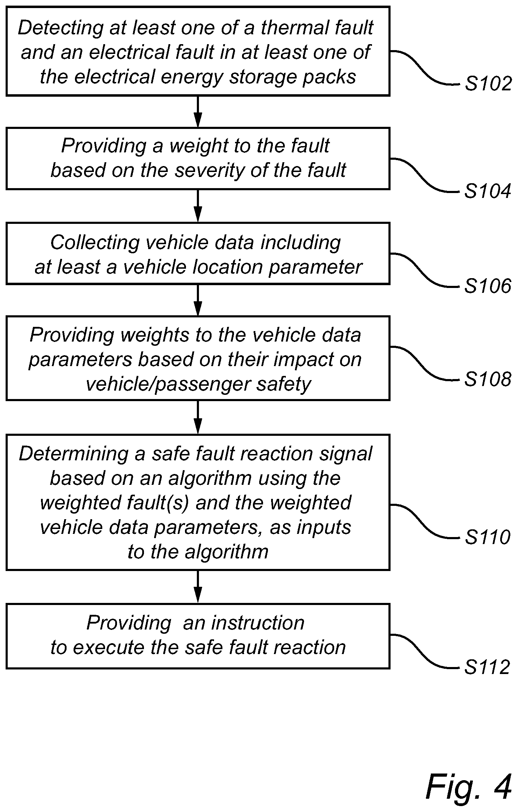

**FIG. 4** is a flow-chart of method steps according to an example.

In step S 102, detecting, by processing circuitry of a computer system, at least one of a thermal fault and an electrical fault in at least one of the electrical energy storage packs.

In step S104, providing, by the processing circuitry, a weight to the fault based on the severity of the fault.

In step S 106, collecting, by the processing circuitry, vehicle data including at least a vehicle location parameter.

In step S 108, providing, by the processing circuitry, weights to the vehicle data parameters based on their impact on vehicle/passenger safety.

In step S 110, determining, by the processing circuitry, a safe fault reaction signal based on an algorithm using the weighted fault(s) and the weighted vehicle data parameters, as inputs to the algorithm. The safe fault reaction may further be based on the number of electrical energy storage packs installed in the vehicle, the number of electrical energy storage packs connected to the bus in the vehicle, and the number of electrical energy storage packs involved in the fault.

In step S 112, providing, by the processing circuitry, an instruction to execute the safe fault reaction.

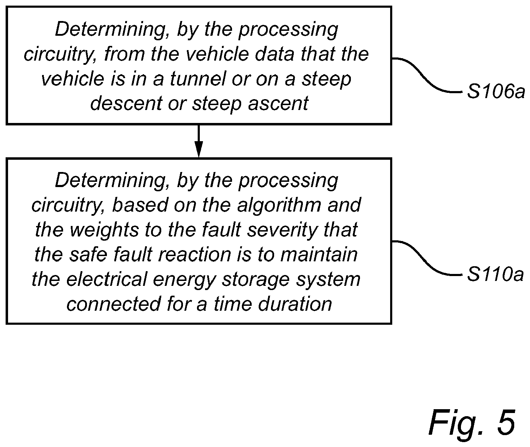

**FIG. 5** is a flow-chart of method steps according to an example.

Step S106 in fig. 4 may include step S106a, of determining, by the processing circuitry, from the vehicle data that the vehicle is in a tunnel or on a steep descent or steep ascent.

Furthermore, step S 110 in fig. 4 may include step S110a of determining, by the processing circuitry, based on the algorithm and the weights to the fault severity that the safe fault reaction is to maintain the electrical energy storage system connected for a time duration.

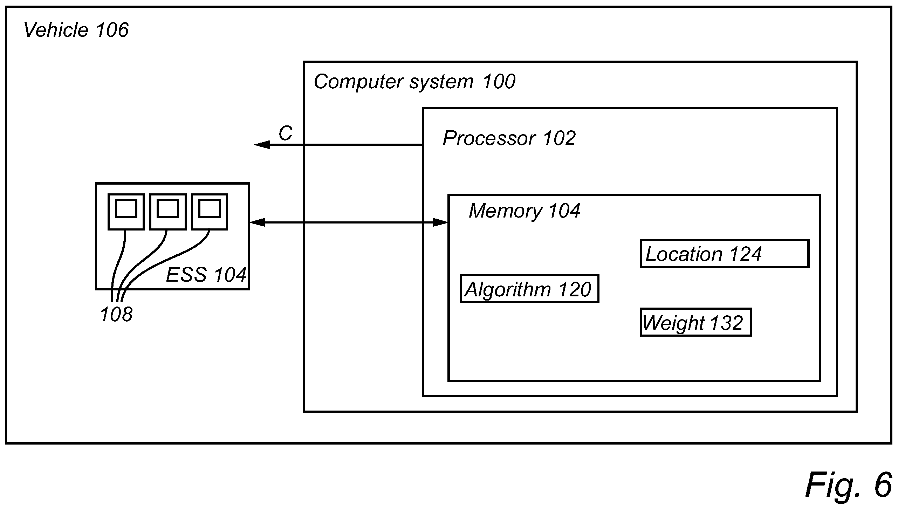

**FIG. 6** is another view of **FIG. 1****,** according to an example. A computer system 100 for responding to faults in an electrical energy storage system 104 of a vehicle 106 comprising multiple electrical energy storage packs 108, the computer system comprising processing circuitry 102 configured to: detect at least one of a thermal fault and an electrical fault in at least one of the electrical energy storage packs 108; provide a weight 132 to the fault based on the severity of the fault; collect vehicle data including at least a vehicle location parameter 124; provide weights 132 to the vehicle data parameters based on their impact on vehicle/passenger safety, determine a safe fault reaction based on an algorithm 120 using the weighted fault(s) and the weighted vehicle data parameters, as inputs to the algorithm; and provide an instruction C to execute the safe fault reaction.

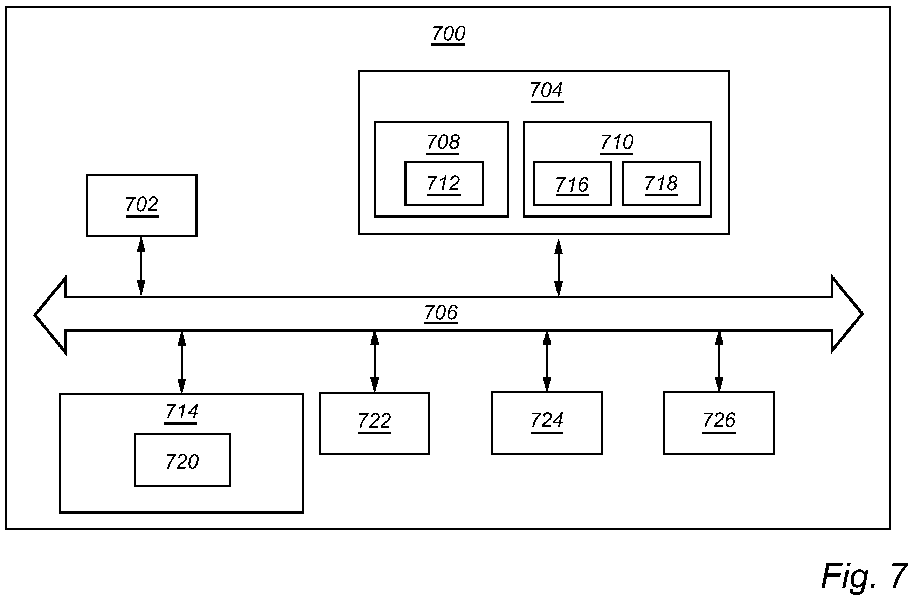

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for responding to faults in an electrical energy storage system of a vehicle comprising multiple electrical energy storage packs, the computer system comprising processing circuitry configured to: detect at least one of a thermal fault and an electrical fault in at least one of the electrical energy storage packs; provide a weight to the fault based on the severity of the fault; collect vehicle data including at least a vehicle location parameter; provide weights to the vehicle data parameters based on their impact on vehicle/passenger safety, determine a safe fault reaction based on an algorithm using the weighted fault(s) and the weighted vehicle data parameters, as inputs to the algorithm; and provide an instruction to execute the safe fault reaction.

Example 2: The computer system of example 1, wherein the vehicle data further includes a vehicle surroundings parameter that depends on objects detected near the vehicle.

Example 3: The computer system of any of examples 1-2, wherein the processing circuitry is further configured to: determine the safe fault reaction further based on the number of electrical energy storage packs installed in the vehicle, the number of electrical energy storage packs connected to the bus in the vehicle, and the number of electrical energy storage packs involved in the fault.

Example 4: The computer system of any of examples 1-2, wherein the vehicle data further includes at least one of number of passengers and cargo type.

Example 5: The computer system of any of examples 1-4, wherein the weighting of parameters/faults is determined from a predetermined look-up table, or by the algorithm.

Example 6: The computer system of any of examples 1-5, wherein the safe fault reaction is one of disconnecting or maintaining an electrical energy storage pack connected to a voltage bus connected to a load.

Example 7: The computer system of any of examples 1-6, wherein the algorithm calculates a first score based on the weights determined for a first option being to maintain contactors of the electrical energy storage system to a voltage bus closed, and a second score based on the weights determined for a second option being to open the contactors of the electrical energy storage, and to compare the first score to the second score to determine which of maintaining the contactors closed or opening the contactors is the safe fault reaction.

Example 8: The computer system of example 1, wherein the processing circuitry is further configured to: determine, from the vehicle data that the vehicle is in a tunnel or on a steep descent or steep ascent, and determine, based on the algorithm and the weights to the fault severity that the safe fault reaction is to maintain the electrical energy storage system connected for a time duration.

Example 9: The computer system of example 8, wherein the safe fault reaction includes to disconnect the electrical energy storage system once the time duration has lapsed.

Example 10: The computer system of example 8, wherein the time duration is sufficient to drive through the tunnel or past the steep descent or steep ascent when the severity of the thermal fault or the electrical fault indicates that a thermal event will not occur within the time duration.

Example 11: A vehicle comprising the computer system of any of examples 1-10.

Example 12: A computer-implemented method, comprising: detecting, by processing circuitry of a computer system, at least one of a thermal fault and an electrical fault in at least one of the electrical energy storage packs; providing, by the processing circuitry, a weight to the fault based on the severity of the fault; collecting, by the processing circuitry, vehicle data including at least a vehicle location parameter; providing, by the processing circuitry, weights to the vehicle data parameters based on their impact on vehicle/passenger safety, determining, by the processing circuitry, a safe fault reaction signal based on an algorithm using the weighted fault(s) and the weighted vehicle data parameters, as inputs to the algorithm; and providing, by the processing circuitry, an instruction to execute the safe fault reaction.

Example 13: The method of example 12, further comprising: determining the safe fault reaction and/or weights further based on a state of energy in the electrical energy storage packs.

Example 14: The method of example 13, wherein the vehicle data further includes a vehicle surroundings parameter that depends on objects detected near the vehicle and/or a number of passengers parameter and/or a cargo type parameter.

Example 15: The method of any of examples 13-14, comprising: determining, by the processing circuitry, the safe fault reaction further based on the number of electrical energy storage packs installed in the vehicle, the number of electrical energy storage packs connected to the bus in the vehicle, and the number of electrical energy storage packs involved in the fault.

Example 16: The method of any of examples 12-15, wherein the algorithm calculates a first score based on the weights determined for a first option being to maintain contactors of the electrical energy storage system to a voltage bus closed, and a second score based on the weights determined for a second option being to open the contactors of the electrical energy storage, and to compare the first score to the second score to determine which of maintaining the contactors closed or opening the contactors is the safe fault reaction.

Example 17: The method of example 1, wherein the processing circuitry is further configured to: determining, by the processing circuitry, from the vehicle data that the vehicle is in a tunnel or on a steep descent or steep ascent, and determining, by the processing circuitry, based on the algorithm and the weights to the fault severity that the safe fault reaction is to maintain the electrical energy storage system connected for a time duration.

Example 18: The method of example 17, wherein the safe fault reaction includes to disconnect the electrical energy storage system once the time duration has lapsed.

Example 19: The method of example 18, wherein the time duration is sufficient to drive through the tunnel or past the steep descent or steep ascent when the severity of the thermal fault or the electrical fault indicates that a thermal event will not occur within the time duration.

Example 20: A computer program product comprising program code for performing, when executed by the processing circuitry, the method of any of examples 12-19.

Example 21: A non-transitory computer-readable storage medium comprising instructions, which when executed by the processing circuitry, cause the processing circuitry to perform the method of any of examples 12-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for responding to faults in an electrical energy storage system (104) of a vehicle (106) comprising multiple electrical energy storage packs (108), the computer system comprising processing circuitry (102) configured to:
detect at least one of a thermal fault and an electrical fault in at least one of the electrical energy storage packs (108);
provide a weight (132) to the fault based on the severity of the fault;
collect vehicle data including at least a vehicle location parameter (124);
provide weights to the vehicle data parameters based on their impact on vehicle/passenger safety,
determine a safe fault reaction based on an algorithm (120) using the weighted fault(s) and the weighted vehicle data parameters, as inputs to the algorithm; and
provide an instruction (C) to execute the safe fault reaction.

2. The computer system of claim 1, wherein the vehicle data further includes a vehicle surroundings parameter (126) that depends on objects detected near the vehicle.

3. The computer system of any of claims 1-2, wherein the processing circuitry is further configured to:
determine the safe fault reaction further based on the number of electrical energy storage packs installed in the vehicle, the number of electrical energy storage packs connected to the voltage bus (110) in the vehicle, and the number of electrical energy storage packs involved in the fault.

4. The computer system of any of claims 1-2, wherein the vehicle data further includes at least one of number of passengers and cargo type.

5. The computer system of any of claims 1-4, wherein the weighting of parameters/faults is determined from a predetermined look-up table, or by the algorithm.

6. The computer system of any of claims 1-5, wherein the safe fault reaction is one of disconnecting or maintaining an electrical energy storage pack connected to a voltage bus connected to a load.

7. The computer system of any of claims 1-6, wherein the algorithm calculates a first score based on the weights determined for a first option being to maintain contactors (110) of the electrical energy storage system to a voltage bus (112) closed, and a second score based on the weights determined for a second option being to open the contactors of the electrical energy storage, and to compare the first score to the second score to determine which of maintaining the contactors closed or opening the contactors is the safe fault reaction.

8. The computer system of claim 1, wherein the processing circuitry is further configured to:
determine, from the vehicle data that the vehicle is in a tunnel (202) or on a steep descent (304) or steep ascent (302), and
determine, based on the algorithm and the weights to the fault severity that the safe fault reaction is to maintain the electrical energy storage system connected for a time duration.

9. The computer system of claim 8, wherein the safe fault reaction includes to disconnect the electrical energy storage system once the time duration has lapsed.

10. The computer system of claim 8, wherein the time duration is sufficient to drive through the tunnel or past the steep descent or steep ascent when the severity of the thermal fault or the electrical fault indicates that a thermal event will not occur within the time duration.

11. A vehicle comprising the computer system of any of claims 1-10.

12. A computer-implemented method, comprising:
detecting (S102), by processing circuitry of a computer system, at least one of a thermal fault and an electrical fault in at least one of the electrical energy storage packs;
providing (S104), by the processing circuitry, a weight to the fault based on the severity of the fault;
collecting (S 106), by the processing circuitry, vehicle data including at least a vehicle location parameter;
providing (S 108), by the processing circuitry, weights to the vehicle data parameters based on their impact on vehicle/passenger safety,
determining (S110), by the processing circuitry, a safe fault reaction signal based on an algorithm using the weighted fault(s) and the weighted vehicle data parameters, as inputs to the algorithm; and
providing (S112), by the processing circuitry, an instruction to execute the safe fault reaction.

13. The method of claim 12, further comprising:
determining the safe fault reaction and/or weights further based on a state of energy in the electrical energy storage packs.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
